# EUROPEAN PATENT APPLICATION

(11) **EP 3 678 087 A1**
(43) Date of publication of application: **08.07.2020**
(21) Application number: 18852668.5
(22) Date of filing: 01.08.2018
(51) Int. Cl.: G06Q 50/12

(54) **COMPUTER SYSTEM FOR PROPOSING WINE FOR CONSUMPTION WITH FOOD AND METHOD AND PROGRAM TO BE EXECUTED IN SAID COMPUTER SYSTEM**

(30) Priority: 29.08.2017 JP 2017164266
(71) Applicant: Broad Edge Liqueur, Inc., Tokyo 150-0034 (JP)
(72) Inventor: MARUOKA Eishi, Tokyo 150-0034 (JP)
(74) Representative: Uexküll & Stolberg
(86) International application number: PCT/JP2018/028808
(87) International publication number: WO 2019/044341

(57) **Abstract**

The computer system of the present invention is a computer system for suggesting a wine to drink with a food comprising: means for receiving food information showing a food inputted by a user; and means for suggesting at least one type of wine to drink with the food based on the food information. The means for suggesting the at least one type of wine to drink with the food comprises: means for identifying at least two features of the food based on the food information, wherein the at least two features of the food are associated with two viewpoints, which are a food "body" and a food "flavor"; and means for identifying at least one type of wine to drink with the food based on the at least two features of the food.

## Description

### [Technical Field]

The present invention is related to a computer system for suggesting a wine to drink with a food and a method and program to be executed in said computer system.

### [Background Art]

It has been known that compatibility exists between food and wine (e.g., see Non Patent Literature **1).**

### [Citation List]

### [Non Patent Literature]

[NPL 1] ASAHI BREWERIES, LTD., "Ryori to wain tono aisho wain to ryori no mariaju (Compatibility of food and wine Marriage of wine and food)", [online], [retrieved on August 18, 2017], internet <URL: https://www.asahibeer.co.jp/enjoy/wine/know/enjoy/3_6.html>

### [Summary of Invention]

### [Technical Problem]

However, not all eating and drinking places has a sommelier with specialized knowledge of wine and since eating and drinking places with no sommelier do not have human resources that can suggest a wine to drink with a food, it was difficult to enjoy wine with food. Especially Japanese eating places (e.g., sushi places, yakitori places, tempura places and the like), where wine storage itself was rare, do not have human resources that can suggest a wine to drink with a Japanese food. Thus, it was difficult to enjoy wine with Japanese food.

The present invention was invented in view of the problem discussed above and the objective of the invention is to increase the amount of consumption of wine and activate the wine industry by encouraging the demand of wine in eating and drinking places that have not been familiar with wine by providing a computer system or the like that enables suggestion of a wine to drink with a food even in eating and drinking places with no sommelier.

### [Solution to Problem]

In one aspect of the present invention, the computer system of the present invention is a computer system for suggesting a wine to drink with a food, the computer system comprising: means for receiving food information showing a food inputted by a user; and means for suggesting at least one type of wine to drink with the food based on the food information.

In one embodiment of the present invention, the means for suggesting the at least one type of wine to drink with the food may comprise: means for identifying at least two features of the food based on the food information, wherein the at least two features of the food are at least associated with two viewpoints, which are a food "body" and a food "flavor"; and means for identifying at least one type of wine to drink with the food based on the at least two features of the food.

In one embodiment of the present invention, the food "body" may be associated with three viewpoints, which are a food "material", a food "seasoning" and a food "cooking method".

In one embodiment of the present invention, the means for identifying the at least one type of wine to drink with the food may comprise: means for identifying at least one type of wine to drink with the food based on the at least two features of the food and at least two features of the at least one type of wine, wherein the at least two features of the at least one type of wine are associated with two viewpoints, which are a wine "body" and a wine "flavor".

In one embodiment of the present invention, the means for identifying the at least one type of wine to drink with the food may comprise: means for identifying one or more type of wine having a feature associated with a wine "body" recommended for the food "body" based on a feature of the food associated with the food "body"; and means for identifying at least one type of wine to drink with the food among the identified one or more type of wine recommended for the food "body" based on the feature of the food associated with the food "flavor" and a feature of a wine associated with the wine "flavor".

In one embodiment of the present invention, the wine "flavor" is an evaluation of a wine from a plurality of viewpoints related to a wine characteristic, wherein the plurality of viewpoints related to the wine characteristic may comprise viewpoints of "sweetness", "saltiness", "acidity", "astringency" and "maturity".

The food "flavor" is an evaluation of a food from a plurality of viewpoints related to a food characteristic, wherein the plurality of viewpoints related to the food characteristic may comprise viewpoints of "sweetness", "saltiness", "acidity", "bitterness" and "umami".

In one embodiment of the present invention, the means for suggesting the at least one type of wine to drink with the food may comprise: means for identifying at least one feature of the food based on the food information, wherein the at least one feature of the food is at least associated with three viewpoints, which are a food "material", a food "seasoning" and a food "cooking method"; and means for identifying at least one type of wine to drink with the food based on the at least one feature of the food.

In one embodiment of the present invention, the means for identifying the at least one type of wine to drink with the food may comprises: means for identifying a first one or more type of wine recommended for the food "material" based on a feature of the food associated with the food "material"; means for identifying a second one or more type of wine recommended for the food "seasoning" based on a feature of the food associated with the food "seasoning"; means for identifying a third one or more type of wine recommended for the food "cooking method" based on a feature of the food associated with the food "cooking method"; and means for identifying at least one type of wine to drink with the food based on at least one of the first one or more type of wine, the second one or more type of wine and the third one or more type of wine.

In one embodiment of the present invention, the means for identifying the at least one type of wine to drink with the food may comprises: means for identifying a first one or more wine group recommended for the food "material" based on a feature of the food associated with the food "material"; means for identifying a second one or more wine group recommended for the food "seasoning" based on a feature of the food associated with the food "seasoning"; means for identifying a third one or more wine group recommended for the food "cooking method" based on a feature of the food associated with the food "cooking method"; means for identifying at least one wine group based on the first one or more wine group, the second one or more wine group and third one or more wine group; and means for identifying at least one type of wine comprised in the at least one wine group as the at least one type of wine to drink with the food.

In one embodiment of the present invention, the at least one wine group is classified by type into a plurality of wines from a plurality of viewpoints regarding wine characteristic, wherein the plurality of viewpoints regarding wine characteristic may comprise viewpoints, which are "astringency", "acidity", "sweetness", "volume", "scent" and "umami".

In one embodiment of the present invention, the means for suggesting the at least one type of wine to drink with the food may suggest at least one type of wine for each rank that shows a grade of recommendation for the food.

In one embodiment of the present invention, the computer system further comprises means for receiving information that shows wine budget inputted by the user, wherein the means for suggesting the at least one type of wine to drink with the food may further comprise means for identifying at least one type of wine with a price within the wine budget among the identified at least one type of wine.

In one embodiment of the present invention, the computer system further comprises means for receiving information of a wine preference of the user inputted by the user, wherein the means for suggesting the at least one type of wine to drink with food may further comprise means for identifying at least one type of wine that satisfies the wine preference of the user among the identified at least one type of wine to drink with the food.

In one embodiment of the present invention, the computer system further comprises means for learning the wine preference of the user, wherein the means for suggesting the at least one type of wine to drink with the food may further comprise means for identifying at least one type of wine that satisfies the wine preference of the user among the identified at least one type of wine to drink with the food.

In one aspect of the present invention, the method of the present invention is a method performed in a computer system for suggesting wine to drink with a food, the computer system comprising a processor part and the method comprising: the processor part receiving food information showing a food inputted by a user; and the processor part suggesting at least one type of wine to drink with the food based on the food information.

In one aspect of the present invention, the program of the present invention is a program performed in a computer system for suggesting wine to drink with a food, the computer system comprising a processor part and once the program is performed by the processor part, the program has the processor part to at least perform: receiving food information that shows a food inputted by a user; and suggesting at least one type of wine to drink with the food based on the food information.

### [Advantageous Effects of Invention]

The present invention can provide a computer system that can suggest a wine to drink with a food even in eating and drinking places with no sommelier and a method and program practiced in the computer system. This enables encouragement of the demand of wine in eating and drinking places that have not been familiar with wine. As a result, it is possible to increase the amount of consumption of wine and activate the wine industry.

### [Brief Description of Drawings]

[Figure 1A] A drawing showing screen **100** displayed in a user apparatus.
[Figure 1B] A drawing showing screen **110** displayed in a user apparatus.
[Figure 1C] A drawing showing screen **120** displayed in a user apparatus.
[Figure 1D] A drawing showing screen **130** displayed in a user apparatus.
[Figure 1E] A drawing showing screen **140** displayed in a user apparatus.
[Figure 2] A drawing showing one example of a configuration of a system for suggesting a wine to drink with a food.
[Figure 3A] A drawing showing one example of a configuration of information stored in a wine database part **231.**
[Figure 3B] A drawing showing one example of a configuration of information stored in a wine group database part **232.**
[Figure 3C] A drawing showing one example of a configuration of information stored in a food database part **233.**
[Figure 3D] A drawing showing one example of a configuration of information stored in a compatibility database part **234.**
[Figure 3E] A drawing showing one example of a configuration of information stored in a user database part **235.**
[Figure 4] A drawing showing one example a flow of a processing practiced in a server apparatus **200.**
[Figure 5] A drawing showing one example of a configuration of a system **2** for realizing a service of suggesting a wine to drink with a food.
[Figure 6A] A drawing showing one example of a configuration of information stored in a wine database part **531.**
[Figure 6B] A drawing showing one example of a configuration of information stored in a wine feature database part **532.**
[Figure 6C] A drawling showing one example of a configuration of information stored in a food feature database part **533.**
[Figure 6D] A drawing showing one example of a configuration of information stored in a food body evaluation database part **534.**
[Figure 7] A drawing of one example of a flow of a processing practiced in a server apparatus **500.**

### [Description of Embodiments]

An embodiment of the present application is explained below while referring to the drawings.

### 1. A service of suggesting a wine to drink with a food

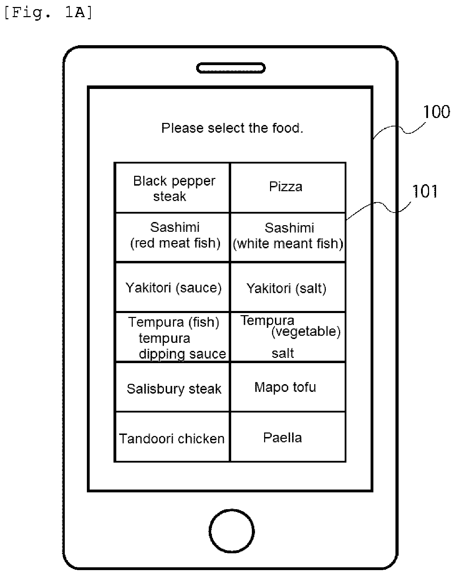

Figure **1A** shows a screen **100** displayed in a user apparatus. A user apparatus refer to any apparatus used by a user. One example of a user apparatus is, but not limited to, a tablet terminal or a smart phone. One example of a user is, but not limited to, an employee of an eating and drinking place handling wine. The following explanation is provided with an example of a case wherein a wine that matches a food is suggested to a customer by an employee of an eating and drinking place operating a user apparatus.

The screen **100** is one example of a top screen displayed for a service of providing wine to drink with food. The screen **100** is used for a user to input a food name to a user apparatus.

In the example shown in Figure **1A****,** the screen **100** comprises a region **101** for selecting a food name. The region **101** displays a plurality of food names. In the example shown in Figure **1A****,** the plurality of food names such as, but are not limited to, sashimi (red meat fish), sashimi (white meat fish), yakitori (sauce), yakitori (salt), tempura (tempura dipping sauce) and tempura (salt) are displayed. Foods other than the food names displayed in the region **101** shown in Figure **1A** may be displayed in the region **101.**

In the example shown in Figure **1A****,** the region **101** is configured so that a user can select any one of the plurality of food names. However, the configuration is not limited thereto. For example, the region **101** may be configured so that a user can individually input a food name. In addition, the region **101** may be configured so as to enable scroll operation or swipe operation by a user. This enables display of many food names in the region **101** without being limited by the size of the screen **100.**

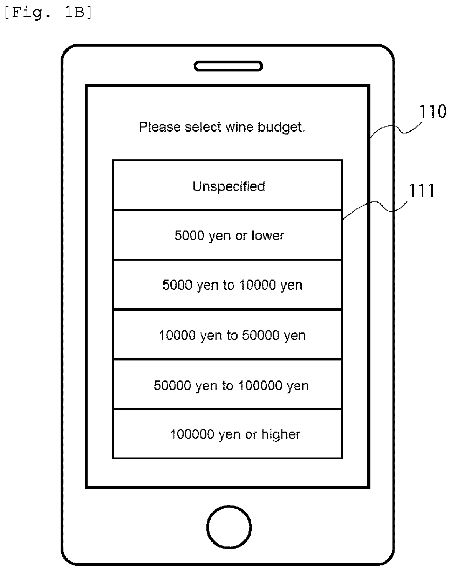

Figure **1B** shows a screen **110** displayed in a user apparatus. The screen **110** is one example of a screen that transitions from a screen **100** when a user inputs a food name in the screen **100** shown in Figure **1A****.** The screen **110** is used for a user to input wine budget to a user apparatus.

In the example shown in Figure **1B****,** the screen **110** comprises a region **111** for selecting wine budget. The region **111** displays a plurality of price ranges of wine budget. The example shown in Figure **1B** displays, but not limited to, unspecified, 5000 yen or lower, 5000 yen to 10000 yen, and 10000 yen to 50000 yen as the plurality of price ranges of wine budget. Price ranges other than the price ranges shown in Figure **1B** may be displayed in the region **111.**

In the example shown in Figure **1B****,** the region **111** is configured so that a user can select any one of the plurality of price ranges of wine budget. However, the configuration is not limited thereto. For example, the region **111** may be configured so that a user can select any one of a plurality of criterions of wine budget (e.g., 5000 yen, 10000 yen, 20000 yen and the like), may be configured so that a user can select the upper limit and the lower limit of wine budget in a pull-down form, or may be configured so that a user can individually input wine budget.

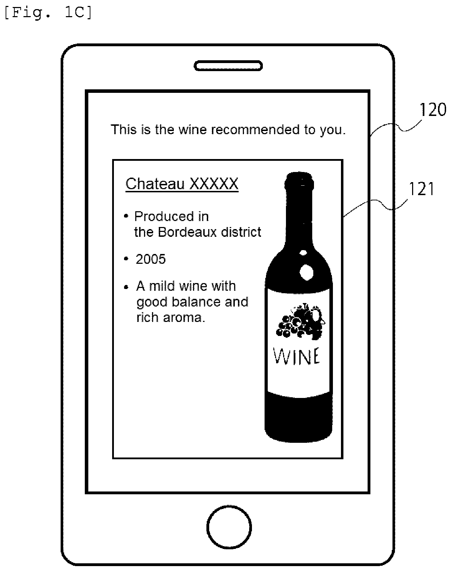

Figure **1C** shows a screen **120** displayed in a user apparatus. The screen **120** is one example of a screen that transitions from the screen **110** when a user inputs wine budget in the screen **111** shown in Figure **1B****.** The screen **120** is used for suggesting a wine to the user based on the food name and wine budged inputted by the user.

In the example shown in Figure **1C****,** the screen **120** comprises a region **121** for displaying a wine that should be suggested to a user. The region **121** displays information for identifying the wine to be suggested. In the example shown in Figure **1C****,** the region **121** displays, but not limited to, wine brand, production district, harvest year and feature as information for identifying a wine to be suggested. Information other than the information for identifying the wine to be suggested shown in Figure **1C** may be displayed in the region **121.**

The example discussed above explained an example wherein a user inputs a food name and then inputs wine budget to later receive suggestion of a wine based on the food name and wine budget inputted by the user. However, it is possible for a user to input wine budget and then input a food name to later receive suggestion of a wine based on the food name and wine budget inputted by the user.

Furthermore, upon suggesting a wine to a user, the wine can be suggested to the user based on information other than a food name and wine budget.

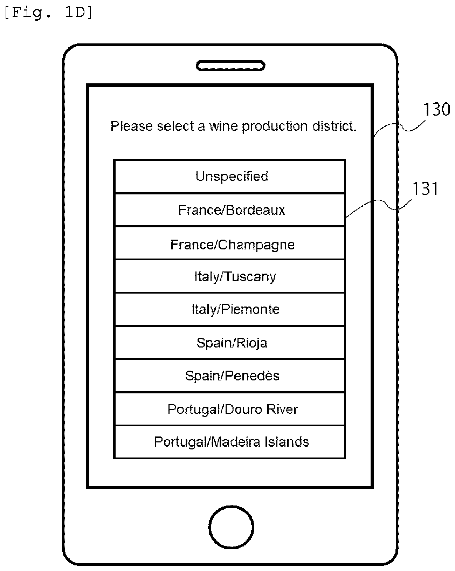

Figure **1D** shows a screen **130** displayed in a user apparatus. The screen **130** is used for a user to input a wine production district to a user apparatus. For example, the screen **130** is one example of a screen that transitions from a screen **110** when a user inputs wine budget in the screen **110** shown in Figure **1B****.**

In the example shown in Figure **1D****,** the screen **130** comprises a region **131** for selecting a wine production district. The region **131** displays a plurality of wine production districts. The example shown in Figure **1D** displays, but not limited to, unspecified, France/Bordeaux, France/Champagne, Italy/Tuscany and the like as the plurality of wine production districts. Production districts other than the production districts shown in Figure **1D** may be displayed in the region **131.**

In the example shown in Figure **1D****,** the region **131** is configured so that a user can select any one of the plurality of wine production districts. However, the configuration is not limited thereto. For example, the region **131** may be configured so that a user can individually input a wine district. In addition, the region **131** may be configured so as to enable scroll operation or swipe operation by a user. This enables display of many wine production districts in the region **131** without being limited by the size of the screen **130.**

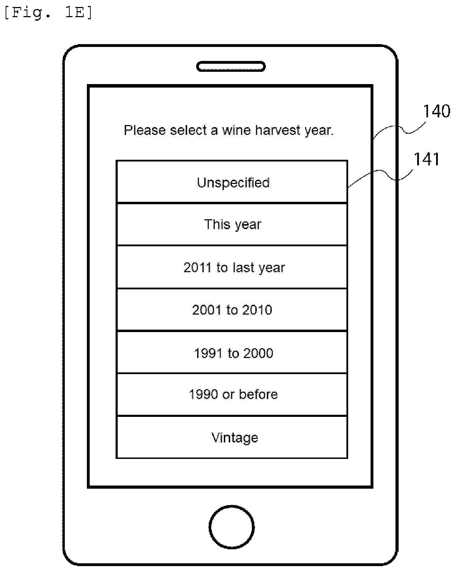

Figure **1E** shows a screen **140** displayed in a user apparatus. The screen **140** is used for a user to input a wine harvest year in a user apparatus. For example, the screen **140** is one example of a screen that transitions from a screen **130** when a user inputs a wine production district in the screen **130** shown in Figure **1D****.**

In the example shown in Figure **1E****,** the screen **140** comprises a region **141** for selecting a wine harvest year. The region **141** displays a plurality of periods of wine harvest years. The example shown in Figure **1E** displays, but not limited to, unspecified, this year, 2011 to last year, 2001 to 2010, ..., vintage and the like as the plurality of periods of wine harvest years. In this regard, "vintage" refers to wine classified as aged wine. Periods other than the periods shown in Figure **1E** may be displayed in the region **141.**

In the example shown in Figure **1E****,** the region **141** is configured so that a user can select any one of the plurality of periods of wine harvest years. However, the configuration is not limited thereto. For example, the region **141** may be configured so that a user can select any one of a plurality of criterions of wine harvest years (e.g., 1990, 2005, 2015 and the like), may be configured so that a user can select the upper limit and the lower limit of wine harvest years in a pull-down form, or may be configured so that a user can individually input a wine harvest year.

The screen **120** shown in Figure **1C** may be a screen that transitions from the screen **130** shown in Figure **1D** when a user inputs a wine production district in the screen **130,** or may be a screen that transitions from a screen **140** when a user inputs a wine harvest year in the screen **140** shown in Figure **1E****.** As such, the screen **120** is used to suggest a wine to a user based on a wine production district and/or a wine harvest year inputted by the user in addition to a food name and wine budget inputted by the user.

In addition, a login processing of a user may be required before displaying the screen **100** shown in Figure **1A** in a user apparatus. This enables learning of user-specific information (e.g., user's wine preference) for each user and enables suggestion to a user of a wine that satisfies the user's preference based on the learned user's wine preference. For example, a user's wine preference (e.g., prefer an astringent wine) can be learned by analyzing the wine characteristic ordered by the user in the past. Alternatively, a user's wine preference (e.g., prefer a sweet wine) may be learned in a more simple manner by asking the user to mention several (e.g., three) wines that the user likes and analyzing the characteristic of those wines. A user's wine preference learned in such a manner can be reflected to the wine that should be suggested to the user.

As such, the service of the present invention can suggest a wine to drink with a food to a user by selecting the food and wine budget using a user apparatus. A user apparatus is typically operated by, but not limited to, an employee of an eating and drinking place. For example, a user apparatus may be operated by a customer of an eating and drinking place instead of an employee of the eating and drinking place.

Furthermore, a user apparatus is typically used, but not limited to, inside an eating and drinking place. A user apparatus may also be used outside an eating and drinking place. For example, a user may download an app in a portable terminal apparatus (e.g., smartphone) owned by the user to use the portable terminal apparatus (e.g., smartphone) to which the app was installed at any location. This enables the user to search a wine to drink with a food without going to an eating and drinking place. In addition, a user can learn compatibility between a food and a wine by repeating such a search.

### 2. Configuration of a system for realizing a service of suggesting a wine to drink with a food.

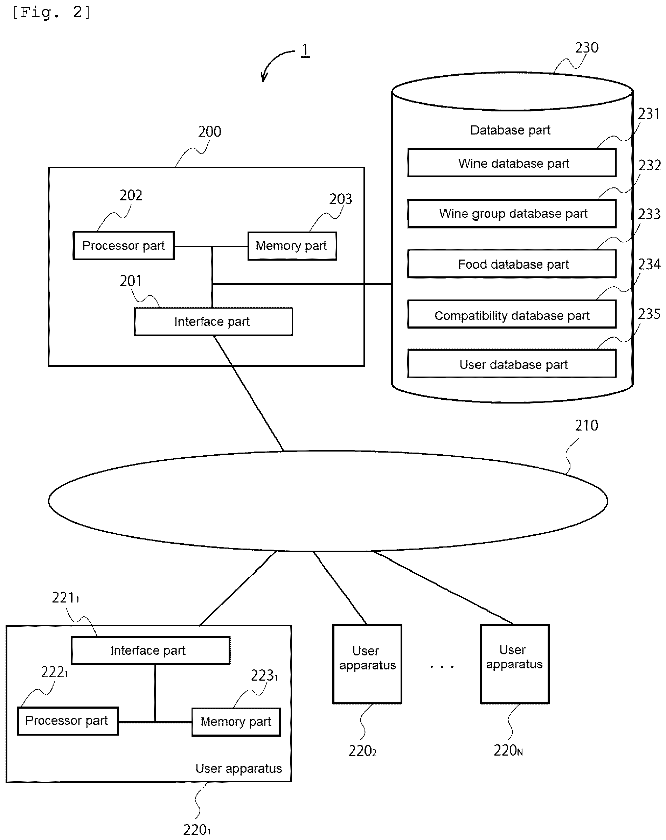

Figure **2** shows one example of a configuration of a system **1** for realizing a service of suggesting a wine to drink with a food.

The system **1** comprises a server apparatus **200,** at least one user apparatuses **220₁** to **220_{N}** configured to enable communication with the server apparatus **200** via the internet **210** and a database part **230.** In this regard, N is any integral number that is 1 or more.

The server apparatus **200** is an information processing apparatus for realizing a service of suggesting a wine to drink with a food. The server apparatus **200** is, for example, a work station or a personal computer that has a hardware configuration that is common as a server. In the example shown in Figure **2****,** the server apparatus **200** comprises an interface part **201,** a processor part **202** comprising one or more CPU (Central Processing Unit) and a memory part **203.** The hardware configuration of the server apparatus **200** may be configured with a single machine, or may be configured by combining a plurality of machines, with no specific limitation other than the limitation of being able to realize the function thereof.

The interface part **201** controls communication with the at least one user apparatuses **220₁** to **220_{N}.**

The memory part **203** stores a program required for performing a processing, data required for performing the program and the like. For example, the memory part **203** stores a program for realizing a service of suggesting a wine to drink with a food by cooperating with an application program stored in a memory part **223₁** of a user apparatus **220₁.** Alternatively, the memory part **203** may store a program for realizing a website for providing a service of suggesting a wine to drink with a food. In this regard, the program can be stored in the memory part **203** in any manner. For example, the program may be preinstalled in the memory part **203.** Alternatively, the program may be installed in the memory part **203** by being downloaded through a network such as the internet **210,** or may be installed in the memory part **203** via a storage medium such as an optical disk or USB.

The processor part **202** controls the action of the server apparatus **200.** The processor part **202** reads out a program stored in the memory part **203** and performs the program. This enables the server apparatus **200** to function as an apparatus having a desired function.

The database part **230** is connected to the server apparatus **200.** The database part **230** comprises a wine database part **231,** wine group database part **232,** a food database part **233,** compatibility database part **234** and a user database part **235.**

Each of the at least one user apparatuses **220₁** to **220_{N}** is configured so that communication with the server apparatus **200** is possible. For example, each of the at least one user apparatuses **220₁** to **220_{N}** may be a portable wireless terminal such as a cellular phone, smartphone, tablet terminal, smart glasses, or smart watch terminal, or may be a personal computer such as a desktop PC, laptop PC, or note PC.

In the example shown in Figure **2****,** the user apparatus **220₁** comprises an interface part **221₁**, a processor part **222₁** comprising one or more CPU (Central Processing Unit) and a memory part **223₁.**

The interface part **221₁** controls communication with the server apparatus **200.**

The memory part **223₁** stores a program required for performing a processing, data required for performing the program and the like. For example, the memory part **223₁** stores an application program for realizing a service of suggesting a wine to drink with a food by cooperating with a program stored in the memory part **203** of the server apparatus **200.** Alternatively, the memory **223₁** may store a program of a web browser for accessing a website for providing a service of suggesting a wine to drink with a food. In this regard, the program can be stored in the memory part **223₁** in any manner. For example, the program may be preinstalled in the memory part **223₁.** Alternatively, the program may be installed in the memory part **223₁** by being downloaded through a network such as the internet **210,** or may be installed in the memory part **223₁** via a storage medium such as an optical disk or USB.

The processor **222₁** controls the action of the user apparatus **220₁.** The processor **222₁** reads out a program stored in the memory part **223₁** and performs the program. This enables the user apparatus **220₁** to function as an apparatus having a desired function.

The form of the processing between the server apparatus **200** and the at least one user apparatuses **220₁** to **220_{N}** can be in any form. For example, the processing for realizing a service of suggesting a wine to drink with a food may be performed by a program installed in the server apparatus **200** and an application program installed in each of the at least one user apparatuses **220₁** to **220_{N}** cooperating with each other. Alternatively, when the server apparatus **200** functions as a web server realizing a website for providing a service of suggesting a wine to drink with a food, each of the at least one user apparatuses **220₁** to **220_{N}** may function as a web browser for accessing the website.

The configuration of the database **230** is not limited to a specific hardware configuration. For example, the database part **230** may be configured with a single hardware part, or may be configured with a plurality of hardware parts. For example, the database part **230** may be configured as a single external hard disk apparatus of the server apparatus **200,** or may be configured as a storage on a cloud connected via a network. Furthermore, the configuration of each database part comprised in the database part **230** is also not limited to a specific hardware configuration. For example, each database part comprised in the database part **230** also may be configured with a single hardware part, or may be configured with a plurality of hardware parts.

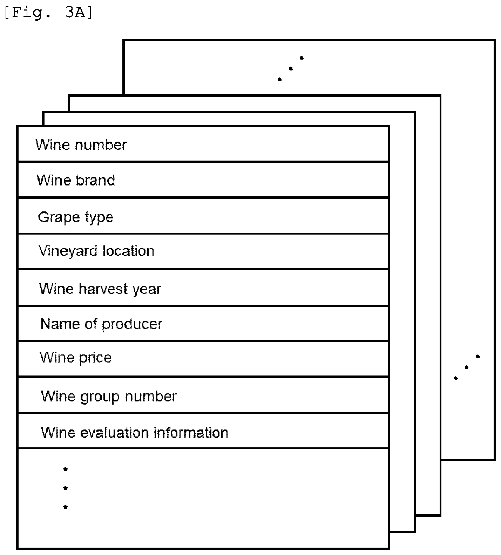

Figure **3A** shows one example of a configuration of information stored in the wine database part **231.**

The wine database part **231** stores information regarding wine. The information regarding a wine can be identified by information for identifying a wine (e.g., wine number). The wine database part **231** further stores wine brand, grape type, vineyard location, wine harvest year, name of producer, wine price, information for identifying a wine group to which a wine belongs (e.g., wine group number), wine evaluation information and the like.

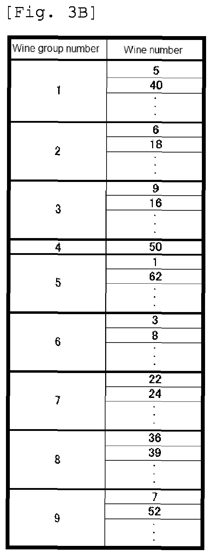

Figure **3B** shows one example of a configuration of information stored in the wine group database part **232.**

The wine group database part **232** stores information regarding a wine group. The information regarding a wine group can be identified by information for identifying a wine group (e.g., wine group number). The wine group database part **232** further stores information for identifying at least one type of wine that belongs to a wine group (e.g., at least one wine number).

In the example shown in Figure **3B****,** a plurality of wines are classified into nine types of wine groups. For example, a wine of which wine number is 5 and a wine of which wine number is 40 are at least classified in a wine group of which wine group number is 1. A wine of which wine number is 6 and a wine of which wine number is 18 are at least classified in a wine group of which wine group number is 2. The same applies to a wine group of which wine group number is any of wine group numbers 3 to 9.

Each of the nine wine groups is formed by classifying a plurality of wines from a plurality of viewpoints regarding wine characteristic. Each of the nine wine groups comprises at least one type of wine. The plurality of viewpoints regarding wine characteristic include, for example, but are not limited to, viewpoints of "astringency", "acidity", "sweetness", "volume", "scent" and "umami".

The number of wine groups is not limited to nine. As long as a plurality of wines can be accurately classified from a plurality of viewpoints regarding wine characteristic, the number of which groups in which the plurality of wines are classified may be any number that is two or more.

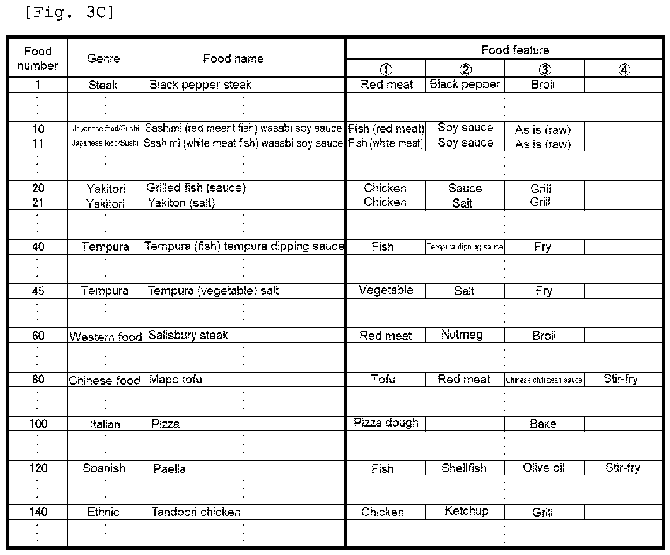

Figure **3C** shows one example of a configuration of information stored in the food database part **233.**

The food database part **233** stores information regarding a food. The information regarding a food can be identified by information for identifying the food (e.g., food number). The food database part **233** further stores food genre, food name, food feature and the like. The feature of a food is associated with a plurality of viewpoints regarding the food. The plurality of viewpoints regarding the food include, for example, but are not limited to, viewpoints of "material", "seasoning" and "cooking method".

In the example shown in Figure **3C****,** a food with a food name "sashimi (red meat fish)" has three features, "fish (red meat)", "soy sauce" and "as is (raw)". This is because a food with a food name "sashimi (red meat fish)" is a food wherein the food "material" is "fish (red meat)", the food "seasoning" is "soy sauce" and the food "cooking method" is "as is (raw)". In addition, a food with a food name "yakitori (sauce)" has three features, "chicken", "sauce" and "grill". This is because a food with a food name "yakitori (sauce)" is a food wherein the food "material" is "chicken", the food "seasoning" is "sauce" and the food "cooking method" is "grill". The same applies to foods with other food names.

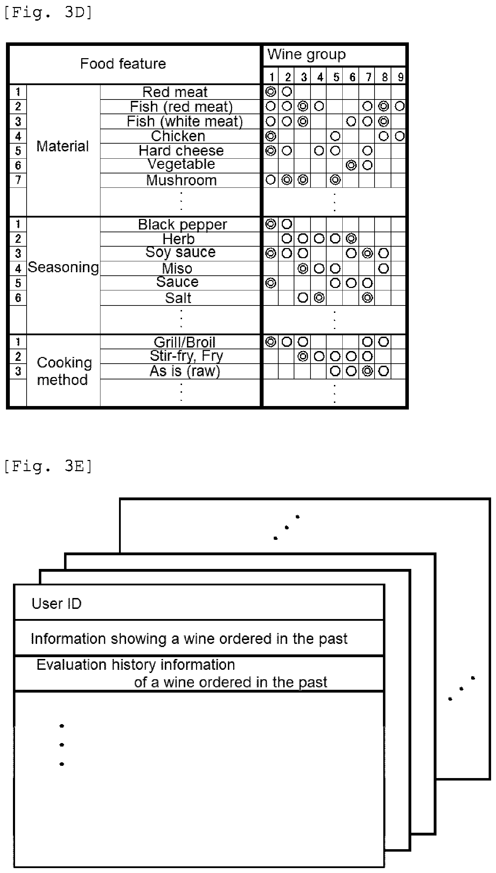

Figure **3D** shows one example of a configuration of information stored in the compatibility database part **234.**

The compatibility database part **234** stores information regarding compatibility between features of a food and wine groups. The information regarding compatibility between features of a food and wine groups comprises information of a wine group recommended for the food "material", which is one of the features of the food, information of a wine group recommended for the food "seasoning", which is one of the features of the food, and information of a wine group recommended for the food "cooking method", which is one of the features of the food.

The example shown in Figure **3D** shows information which very highly recommends a wine that belongs in wine groups of which wine group numbers are 3 and 8 in a table form, and shows information which highly recommends a wine that belongs in wine groups of which wine group numbers are 1, 2, 4, 7 and 9 in a table form, for "fish (red meat)" which is the food "material".

In the same manner, the example shown in Figure **3D** shows information which very highly recommends a wine that belongs in wine groups of which wine group numbers are 1 and 7 in a table form, and shows information which highly recommends a wine that belongs in wine groups of which wine group numbers are 2, 3, 6 and 8 in a table form, for "soy sauce" which is the food "seasoning".

In the same manner, the example shown in Figure **3D** shows information which very highly recommends a wine that belongs in a wine group of which wine group number is 7 in a table form, and shows information which highly recommends a wine that belongs in wine groups of which wine group numbers are 5, 6 and 8 in a table form, for "as is (raw) " which is the food "cooking method".

In this regard, in the table shown in Figure **3D****,** the symbol "⊚" shows "very highly recommended" and the symbol "○" shows "highly recommended". As such, the table shown in Figure **3D** shows compatibility between features of a food and wine groups with a plurality of grades (plurality of levels).

Figure **3E** shows one example of a configuration of information stored in the user database part **235.**

The user database part **235** stores information regarding a user. The information regarding a user can be identified by information for identifying the user (e.g., user ID). The user database part **235** further stores information that shows the wine ordered by a user in the past, evaluation history information of the wine ordered by the user in the past, and the like.

### 3. One example of a processing of a server apparatus

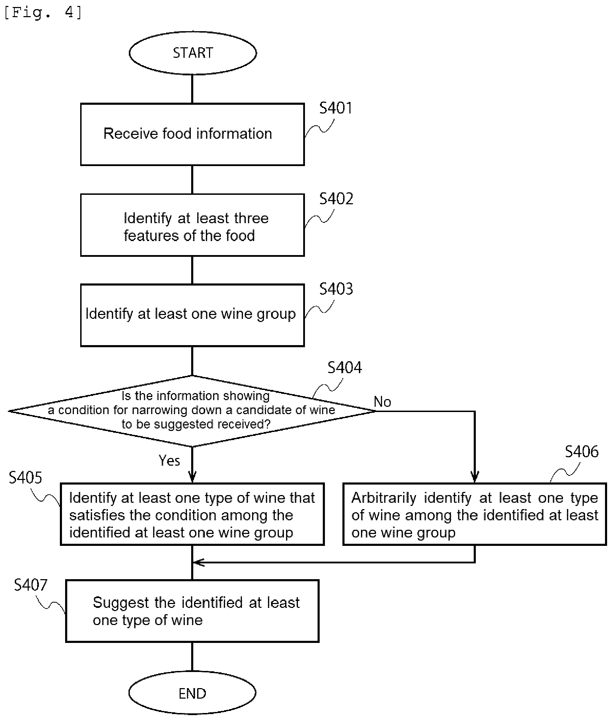

Figure 4 shows one example of a flow of a processing performed in the server apparatus **200.** Each step shown below is performed by a processor part **202** comprised in the server apparatus **200.**

Step **S401:** A processing of receiving food information showing food inputted by a user is performed. The food information includes, for example, but not limited to, food names such as "black pepper steak" and "sashimi (red meat fish)".

Step **S402:** A processing of identifying at least three features of the food is performed based on the received food information. Each of the at least three features of the food is, for example, the feature of the food explained while referring to Figure **3C****.** In other words, the at least three features of the food are associated with, for example, but not limited to, the three viewpoints, "material", "seasoning" and "cooking method".

Step **S403:** A processing of identifying at least one wine group comprising a wine to drink with the food is performed based on the at least three features of the food. Each of the at least one wine group is, for example, the wine group explained while referring to Figure **3B****.** In other words, the at least one wine group is a wine group classifying a plurality of wines from a plurality of viewpoints regarding the wine characteristic. The plurality of viewpoints regarding wine characteristic includes, for example, but is not limited to, viewpoints of "astringency", "acidity", "sweetness", "volume", "scent" and "umami".

The identification of at least one wine group may be achieved by, for example, identifying each of at least one wine group that is very highly or highly recommended for the food "material", at least one wine group that is very highly or highly recommended for the food "seasoning" and at least one wine group that is very highly or highly recommended for the food "cooking method" and then identifying at least one wine group that is common among these wine groups.

For example, when food information of "sashimi (red meat fish)" is received in step **S401,** "fish (red meat)" is identified as the "material" of the "sashimi (red meat fish)", "soy sauce" is identified as the "seasoning" of the "sashimi (red meat fish)" and "as is (raw)" is identified as the "cooking method" of the "sashimi (red meat fish)" in step **S402** while referring to the table shown in Figure **3C****.** Next, wine groups of which wine group numbers are 1 to 4 and 7 to 9 are identified as wine groups that are very highly or highly recommended for the "material" of "fish (red meat)", wine groups of which wine group numbers are 1 to 3 and 6 to 8 are identified as wine groups that are very highly or highly recommended for the "seasoning" of "soy sauce" and wine groups of which wine group numbers are 5 to 8 are identified as wine groups that are very highly or highly recommended for the "cooking method" of "as is (raw)" in step **S403** while referring to the table shown in Figure **3D****.** Finally, wine groups (i.e., wine groups of which wine group numbers are 7 and 8) that are common among the wine groups that are very highly or highly recommended for the "material" of "fish (red meat)", the wine groups that are very highly or highly recommended for the "seasoning" of "soy sauce" and the wine groups that are very highly or highly recommended for the "cooking method" of "as is (raw)" are identified. As such, wine groups of which wine group numbers are 7 and 8 can be identified as wine groups recommended for the food name "sashimi (red meat fish)". Alternatively, a wine group comprised in any of the wine groups that are very highly or highly recommended for the "material" of "fish (red meat)", the wine groups that are very highly or highly recommended for the "seasoning" of "soy sauce" and the wine groups that are very highly or highly recommended for the "cooking method" of "as is (raw)" may be identified as a wine group recommended for the food name "sashimi (red meat fish)".

The example discussed above explained that at least one wine group comprising a wine that should be suggested is identified based on one or more wine group recommended for the "material", one or more wine group recommended for the "seasoning" and one or more wine group recommended for the "cooking method". However, the present invention is not limited thereto. It is also within the scope of the present invention to identify at least one wine group comprising a wine that should be suggested based on at least one among one or more wine group recommended for the "material", one or more wine group recommended for the "seasoning" and one or more wine group recommended for the "cooking method". For example, the identification may be carried out based on one or more wine group recommended for the "material" and one or more wine group recommended for the "cooking method".

In addition, upon which of one or more wine group recommended for the "material", one or more wine group recommended for the "seasoning" and one or more wine group recommended for the "cooking method" the identification of at least one wine group comprising a wine that should be suggested will be based may differ depending on the feature of the food (i.e., depending on which of the food "material", "seasoning" and "cooking method" is the most distinctive). For example, in a case of the food name "sashimi (red meat fish)", the "material" of "fish (red meat)" is the most distinctive. Thus, one or more wine group recommended for the "material" may be identified as the at least one wine group comprising the wine that should be suggested.

Step **S404:** A processing of determining whether or not information showing a condition for narrowing down candidates for the wine to be suggested among the identified at least one wine group is received is performed. In this regard, the number of the information showing a condition for narrowing down candidates for the wine to be suggested may be one or may be plural. When the determination result is "Yes", the processing proceeds to step **S405** and when the determination result is "No", the processing proceeds to step **S406.**

The condition for narrowing down the candidates for the wine to be suggested is, for example, the wine budget inputted by the user, the wine harvest year inputted by the user, the user's wine preference inputted by the user. The wine budget can be expressed by, for example, but not limited to, the wine price range, criterion price, or the like as explained while referring to Figure **1B****.** The wine harvest year can be expressed by, but not limited to, wine harvesting year, period, vintage designation, or the like as explained while referring to Figure **1D****.** The user's wine preference can be expressed by, for example, but not limited to, "astringent wine", "full-bodied wine", "wine of the brand oo", "wine from □□ district" and the like.

Step **S405:** A processing of identifying at least one type of wine that satisfies the received condition among the identified at least one wine group is performed. In this regard, when the number of information showing the condition for narrowing down the candidates for the wine to be suggested is plural, at least one type of wine that satisfies all of the plurality of conditions may be identified, or at least one type of wine that satisfies any of the plurality of conditions may be identified.

Step **S406:** A processing of arbitrarily identifying at least one type of wine among the identified at least one wine group is performed.

Step **S407:** A processing of suggesting the identified at least one type of wine is performed. This is achieved by, for example, displaying information showing the identified at least one type of wine in a user apparatus.

Although the embodiment discussed above explained that whether or not information showing a condition inputted by a user is received is determined in step **S404,** the present invention is not limited thereto. For example, the server apparatus **200** may comprise means for learning a user's preference and may determine whether or not there is a learning history of the user's preference. This enables identification of at least one type of wine that satisfies a user's preference among an identified at least one wine group based on the leaning of the user's preference even when information showing a condition inputted by the user is not received.

In addition, although the embodiment discussed above explained an example wherein steps **S401** to **S407** are performed in a server apparatus **200,** the present invention is not limited thereto. For example, when a program for performing steps **S401** to **S407** is installed in a user apparatus **220₁,** steps **S401** to **S407** may be performed in the user apparatus **220₁.** This enables a service of suggesting wine to drink with food to be realized by the user apparatus **220₁** alone. In such a case, the database part **230** may be wire connected to the user apparatus **220₁,** or may be wirelessly connected to the user apparatus **220₁.** Alternatively, at least a part of the information stored in the database part **230** may be installed in the memory part **223₁** of the user apparatus **220₁.**

In addition, although the embodiment discussed above explained that at least one wine group is identified in step **S403** and at least one type of wine to be suggested is identified among the at least one wine group in step **S405** or **S406,** the present invention is not limited thereto. For example, a wine to drink with a food may be identified without identifying at least one wine group by describing wine numbers instead of wine group numbers in the table shown in Figure **3D** and associating a feature of a food and a wine. This enables suggestion of a wine to drink with a food based on a result of evaluation of a wine from a plurality of viewpoints regarding the wine characteristic even when there is no wine group.

For example, when food information, "yakitori (sauce)" is received, "chicken" is identified as the "material" of the "yakitori (sauce)", "sauce" is identified as the "seasoning" of the "yakitori (sauce)" and "grill" is identified as the "cooking method" of the "yakitori (sauce)" while referring to the table shown in Figure **3C****.** Next, wines of which wine numbers are 1 to 10, 21 to 25 and 40 to 60 are identified as wines that are very highly or highly recommended for the "material" of "chicken", wines of which wine numbers are 11 to 30 and 70 to 80 are identified as wines that are very highly or highly recommended for the "seasoning" of "sauce" and wines of which wine numbers are 1 to 40 and 50 to 70 are identified as wines that are very highly or highly recommended for the "cooking method" of "grill", while referring to the table shown in Figure **3D****.** Finally, wines (i.e., wines of which wine numbers are 21 to 25) that are common among the wines that are very highly or highly recommended for the "material" of "chicken", the wines that are very highly or highly recommended for the "seasoning" of "sauce" and the wines that are very highly or highly recommended for the "cooking method" of "grill" are identified. As such, wines of which wine numbers are 21 to 25 can be identified as the at least one type of wine that is recommended for the food name "yakitori (sauce)". Alternatively, wines (i.e., wines of which wine numbers are 1 to 80) comprised in any of the wines that are very highly or highly recommended for the "material" of "chicken", the wines that are very highly or highly recommended for the "seasoning" of "sauce" and the wines that are very highly or highly recommended for the "cooking method" of "grill" may be identified as the at least one type of wine that is recommended for the food name "yakitori (sauce)". In addition, the at least one type of wine to drink with "yakitori (sauce)" may be identified among wines of which wine numbers are 21 to 25 (or wines of which wine numbers are 1 to 80) may be identified based on a predetermined condition (e.g., information showing the wine budget inputted by the user, information showing the user's wine preference inputted by the user, information showing the wine harvest year inputted by the user, information showing the wine production district inputted by the user, information showing the user's preference obtained or accumulated by the learning function).

Although the embodiment discussed above explained that at least one type of wine to drink with a food is identified based on one or more type of wine recommended for the "material", one or more type of wine recommended for the "seasoning" and one or more type of wine recommended for the "cooking method", the present invention is not limited thereto. It is also within the scope of the present invention to identify at least one type of wine to drink with a food based on at least one of one or more type of wine recommended for the "material", one or more type of wine recommended for the "seasoning" and one or more type of wine recommended for "cooking method". For example, at least one type of wine to drink with a food may be identified based on one or more type of wine recommended for the "material" and one or more type of wine recommended for "seasoning".

In addition, upon which of one or more type of wine recommended for the "material", one or more type of wine recommended for the "seasoning" and one or more type of wine recommended for "cooking method" the identification of at least one type of wine to drink with a food will be based may differ depending on the feature of the food (i.e., depending on which of the food "material", "seasoning" and "cooking method" is the most distinctive). For example, in a case of the food name "yakitori (sauce)", the "seasoning" of "sauce" is the most distinctive. Thus, the at least one type of wine to drink with the food may be identified from one or more type of wine recommended for the "seasoning".

### 4. Other configurations of a system for realizing a service of suggesting a wine to drink with a food

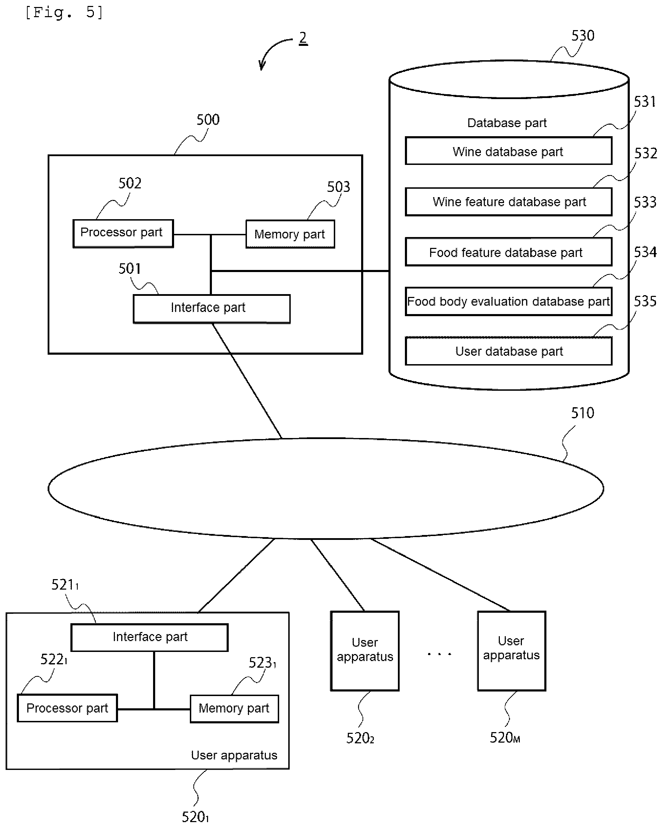

Figure **5** shows one example of a configuration of a system **2** for realizing a service of suggesting a wine to drink with a food.

The system **2** comprises a server apparatus **500,** at least one user apparatus **520₁** to **520_{M}** configured to enable communication with the server apparatus **500** via the internet **510,** and a database part **530.** In this regard, M is any integral number that is 1 or more.

The server apparatus **500** is an information processing apparatus for realizing a service of suggesting a wine to drink with a food. The server apparatus **500** comprises an interface part **501** that controls communication with the at least one user apparatus **520₁** to **520_{M},** a processor part **502** comprising one or more CPU (Central Processing Unit) and a memory part **503.** The configuration of the server apparatus **500** is similar to the configuration of the server apparatus **200** explained while referring to Figure **2****.** Thus, detailed explanation of the configuration of the server apparatus **500** is omitted herein.

The database part **530** is connected to the server apparatus **500.** The database part **530** comprises a wine database part **531,** wine feature database part **532,** food feature database part **533,** food body evaluation database part **534** and user database part **535.**

A user apparatus **520₁** comprises an interface part **521₁** that controls communication with the server apparatus **500,** a processor part **522₁** comprising one or more CPU (Central Processing Unit) and a memory part **523₁.** Each configuration of the at least one user apparatus **520₁** to **520_{M}** is similar to the configuration of the user apparatus **220₁** explained while referring to Figure **2****.** Thus, detailed explanation of each configuration of the at least one user apparatus **520₁** to **520_{M}** is omitted herein.

In addition, the configuration of the database **530** is not limited to a specific hardware configuration. For example, the database part **530** may be configured with a single hardware part, or may be configured with a plurality of hardware parts. For example, the database part **530** may be configured as a single external hard disk apparatus of the server apparatus **500,** or may be configured as a storage on a cloud connected via a network. Furthermore, the configuration of each database part comprised in the database part **530** is also not limited to a specific hardware configuration. For example, each database part comprised in the database part **530** also may be configured with a single hardware part, or may be configured with a plurality of hardware parts. In addition, the configuration of the user database part **535** is similar to the configuration of the user database part **235** explained while referring to Figure **2****.** Thus, detailed explanation of the configuration of the user database part **535** is omitted herein.

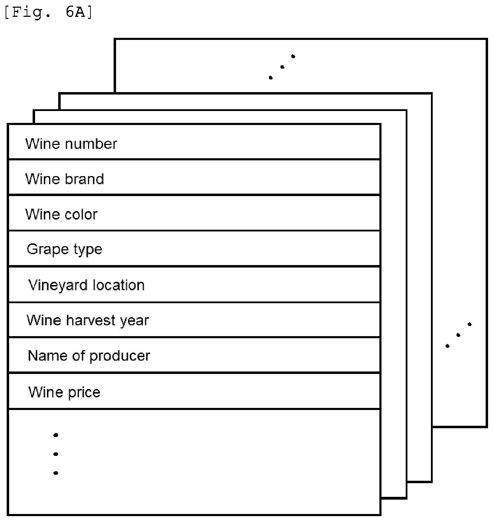

Figure **6A** shows one example of a configuration of information stored in the wine database part **531.**

The wine database part **531** stores information regarding a wine. The information regarding a wine can be identified by information for identifying the wine (e.g., wine number). The wine database part **231** further stores wine brand, wine color, grape type, vineyard location, wine harvest year (production year), name of producer, wine price and the like.

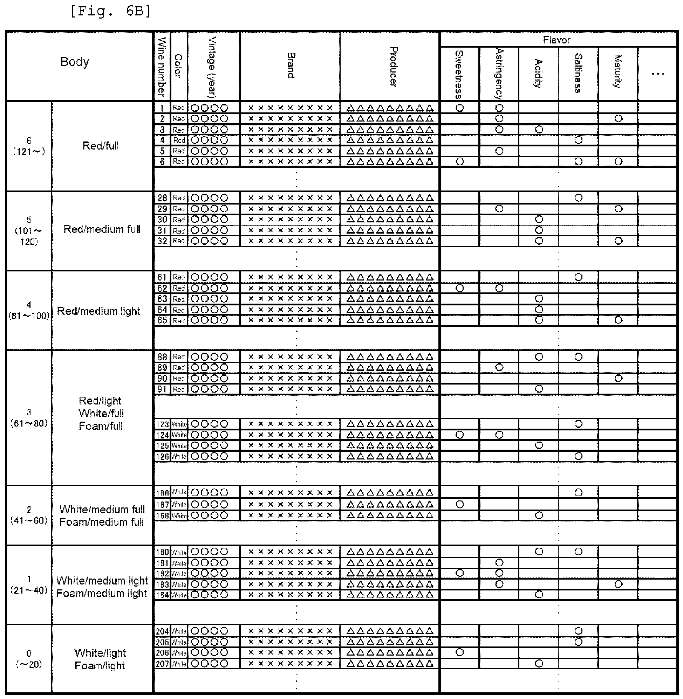

Figure **6B** shows one example of a configuration of information stored in the wine feature database part **532.**

The wine feature database part **532** stores information regarding wine feature. The information regarding wine feature can be identified by information for identifying a wine (e.g., wine number). The wine feature database part **532** further stores wine "body", wine "flavor", wine color, wine production year (vintage), wine brand, name of producer of the wine and the like.

In the example shown in Figure **6B****,** a plurality of wines are classified in to seven bodies from body 0 to body 6. Wine body 0 corresponds to "white/light foam/light", wine body 1 corresponds to "while/medium light foam/medium light", wine body 2 corresponds to "white/medium full foam/medium rare", wine body 3 corresponds to "red/light white/full foam/full", wine body 4 corresponds to "red/medium light", wine body 5 corresponds to "red/medium full" and wine body 6 corresponds to "red/full".

In the example shown in Figure **6B****,** wine numbers 1 to 6 are at least classified in wine body 6, wine numbers 28 to 32 are at least classified in wine body 5, wine numbers 61 to 65 are at least classified in wine body 4, wine numbers 88 to 91 and 123 to 126 are at least classified in wine body 3, wine numbers 166 to 168 are at least classified in wine body 2, wine numbers 180 to 184 are at least classified in wine body 1 and wine numbers 204 to 207 are at least classified in wine body 0.

In addition, each of wine bodies 0 to 6 is associated with the evaluation point of a food body discussed below. In the example shown in Figure **6B****,** food body evaluation points 0 to 20 are associated wine body 0, food body evaluation points 21 to 40 are associated wine body 1, food body evaluation points 41 to 60 are associated wine body 2, food body evaluation points 61 to 80 are associated wine body 3, food body evaluation points 81 to 100 are associated wine body 4, food body evaluation points 101 to 120 are associated wine body 5, and food body evaluation point 121 and higher are associated wine body 6.

The wine "flavor" is an evaluation of wine from a plurality of viewpoints regarding the wine characteristic. In the example shown in Figure **6B****,** the plurality of viewpoints regarding the wine characteristic include, but are not limited to, viewpoints of "sweetness", "astringency", "acidity", "saltiness" and "maturity".

The example shown in Figure **6B** shows information of a wine of wine number 1 of wine body 6 having a strong feature in the "sweetness" and "astringency" in a table form and shows information of a wine of wine number 64 of wine body 4 having a strong feature in the "acidity" and "maturity".

In this regard, in the table shown in Figure **6B****,** the symbol "○" shows that "there is a strong feature". In addition, when a plurality of "o" are given to one wine, at least one of the plurality of "o" may be "⊚" that shows that "there is a very strong feature" instead of "○". In addition, when a plurality of "○" are given to one wine, at least one of the plurality of "○" may be "Δ" that shows that "there is a weak feature" instead of "○". This allows the attempt of weighting among viewpoints associated with wine "flavor".

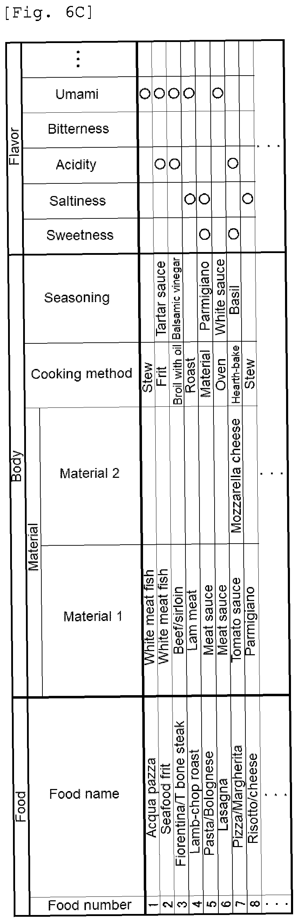

Figure **6C** shows one example of a configuration of information stored in the food feature database part **533.**

The food feature database part **533** stores information regarding a feature of a food. The information regarding a feature of a food can be identified by information for identifying a food (e.g., food number). The feature of a food stored in the food feature database part **533** is associated with a plurality of viewpoints regarding the food. The plurality of viewpoints regarding the food include, for example, but are not limited to, viewpoints of food "body" and "flavor". Furthermore, the food "body" is at least associated with three viewpoints, food "material", "seasoning" and "cooking method". The food "flavor" is an evaluation of the food from a plurality of viewpoints regarding food characteristic, wherein the plurality of viewpoints regarding the food characteristic include, for example, but are not limited to, "sweetness", "saltiness", "acidity", "bitterness" and "umami".

In the example shown in Figure **6C****,** the food "body" (food number 3) of which food name is "Fiorentina/T bone steak" has three features, "beef/sirloin", "balsamic vinegar" and "broil with oil". This is because the food "material" is "beef/sirloin", the food "seasoning" is "balsamic vinegar" and the food "cooking method" is "broil with oil" in the food (food number 3) of which food name is "Fiorentina/T bone steak". In addition, the food "body" (food number 7) of which food name is "pizza/Margherita" has four features, "tomato sauce", "mozzarella cheese", "basil" and "hearth-bake". This is because the food "material" is "tomato sauce" and "mozzarella cheese", the food "seasoning" is "basil" and the food "cooking method" is "hearth-bake" in the food (food number 7) of which food name is "pizza/Margherita". The same applies to foods with other food names.

In the example shown in Figure **6C****,** information of the food (food number 3) of which food name is "Fiorentina/T bone steak" having a strong feature in "acidity" and "umami" regarding the food "flavor" is shown in a table form and information of the food (food number 7) of which food name is "pizza/Margherita" having a strong feature in "sweetness" and "acidity" regarding the food "flavor" is shown in a table form.

In this regard, in the table shown in Figure **6C****,** the symbol "o" shows that "there is a strong feature". In addition, when a plurality of "o" are given to one food, at least one of the plurality of "○" may be "⊚" that shows that "there is a very strong feature" instead of "o". In addition, when a plurality of "o" are given to one food, at least one of the plurality of "○" may be "Δ" that shows that "there is a weak feature" instead of "○". This allows the attempt of weighting among viewpoints associated with the food "flavor".

In addition, in the example shown in Figure **6B** and Figure **6C****,** the "sweetness", "saltiness", "acidity", "bitterness" and "umami" expressing the food "flavor" in the food feature database part **533** correspond to the "sweetness", "saltiness", "acidity", "astringency" and "maturity" expressing the wine "flavor" in the wine feature database part **532,** respectively.

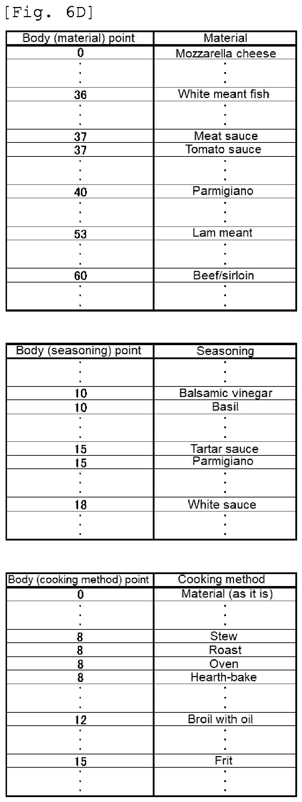

Figure **6D** shows one example of a configuration of information stored in the food body evaluation database part **534.**

The food body evaluation database part **534** stores information regarding evaluation of the food "body". The information regarding the food "body" comprises the food "body" and evaluation points corresponding to the food "body". Specifically, information regarding the evaluation of the "body" a food comprises the food "material" and an evaluation point corresponding to the food "material", the food "seasoning" and an evaluation point corresponding to the food "seasoning" and the food "cooking method" and an evaluation point corresponding to the food "cooking method".

In the example shown in Figure **6D****,** the evaluation point of the food material "mozzarella cheese" is 0 point and the evaluation point of the food material "tomato sauce" is 37 points, the evaluation point of the food material "beef/sirloin" is 60 points, the evaluation point of the food seasoning "balsamic vinegar" is 10 points, the evaluation point of the food seasoning "basil" is 10 points, the evaluation point of the food cooking method "hearth-bake" is 8 points and the evaluation point of the food cooking method "broil with oil" is 12 points.

In addition, although the example shown in Figure **6D** expresses the evaluation of the food "body" using points, the form of the evaluation of the food "body" is not limited thereto. For example, the evaluation of the food "body" may be expressed using alphabets such as S, A, B, C, or the like.

### 5. Another example of a processing of a server apparatus

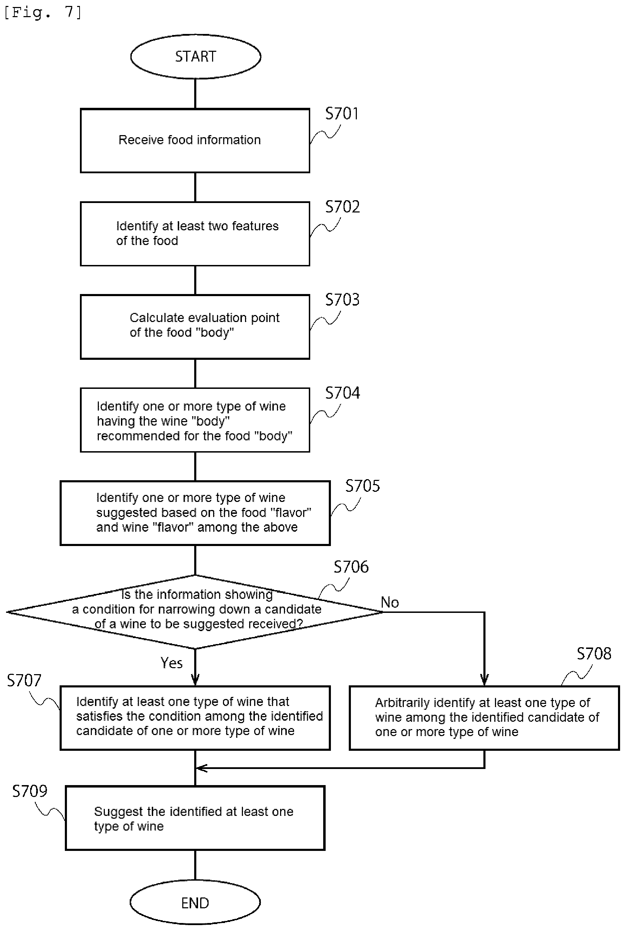

Figure **7** shows one example of a flow of a processing performed in the server apparatus **500.** Each step shown below is performed by the processor part **502** comprised in the server apparatus **500.**

Step **S701:** A processing of receiving food information showing a food inputted by a user is performed. The food information comprises a food name such as, but is not limited to, "Fiorentina/T bone steak" or "pizza/Margherita".

Step **S702:** A processing of identifying at least two features of the food is performed based on the received food information. Each of the at least two features of the food is, for example, the feature of the food explained while referring to Figure **6C****.** In other words, the at least two features of the food is at least associated with two viewpoints, food "body" and "flavor". In addition to the two viewpoints, food "body" and "flavor", the at least two features of the food may further be associated with viewpoints other than the two viewpoints, food "body" and "flavor". In addition, the food "body" is associated with a plurality of viewpoints regarding the food characteristic, wherein the plurality of viewpoints regarding the food characteristic includes, for example, but are not limited to, three viewpoints, food "material", "seasoning" and "cooking method".

Step **S703:** A processing of calculating the evaluation point of the food "body" is performed based on the identified food "body".

Step **S704:** A processing of identifying one or more type of wine having a feature associated with the wine "body" that is recommended for the food "body" is performed based on the calculated evaluation point of the food "body".

Step **S705:** A candidate of one or more type of wine to be suggested is identified among the one or more type of wine identified in step **S704** based on the food "flavor" identified in step **S702** and the wine "flavor".

For example, when food information of "Fiorentina/T bone steak" is received in step **S701,** "beef/sirloin" is identified as the "material" of the "Fiorentina/T bone steak", "balsamic vinegar" is identified as the "seasoning" of the "Fiorentina/T bone steak" and "broil with oil" is identified as the "cooking method" of the "Fiorentina/T bone steak" in step **S702** while referring to the table shown in Figure **6C****.** Next, the evaluation point (i.e., 60 points) corresponding to the "beef/sirloin", which is the "material" of the "Fiorentina/T bone steak", the evaluation point (i.e., 10 points) corresponding to the "balsamic vinegar", which is the "seasoning" of the "Fiorentina/T bone steak" and the evaluation point (i.e., 12 points) corresponding to the "broil with oil", which is the "cooking method" of the "Fiorentina/T bone steak", are identified and the total (i.e., 82 points) of the evaluation point of the "material" of the "Fiorentina/T bone steak", the evaluation point of the "seasoning" of the "Fiorentina/T bone steak" and the evaluation point of the "cooking method" of the "Fiorentina/T bone steak" is calculated as the evaluation point of the "body" of the "Fiorentina/T bone steak" in step **S703** while referring to the table shown in Figure **6D****.** Next, one or more type of wine that belongs to the body level (i.e., wine body 4) of the wine that corresponds to the calculated evaluation point (82 points) of the "body" of the "Fiorentina/T bone steak" is identified as one or more type of wine that has the feature associated with the wine "body" that is recommended for the "body" of the "Fiorentina/T bone steak" in step **S704** while referring to the table shown in Figure **6B****.** Finally, one or more type of wine having the feature of the "flavor" (i.e., "acidity" and "maturity") of the wine corresponding to the "flavor" (i.e., "acidity" and "umami") of the "Fiorentina/T bone steak" is identified as a candidate of the one or more type of wine to be suggested to the user among the one or more type of wine having the feature associated with the wine "body" recommended for the "body" of the "Fiorentina/T bone steak" in step **S705.**

In addition, although the example discussed above explained an example wherein the evaluation point of the food "body" is a total of the evaluation point of the food "material", the evaluation point of the food "seasoning" and the evaluation point of the food "cooking method", the present invention is not limited thereto. For example, the evaluation point of the food "body" may be an average point of the evaluation point of the food "material", the evaluation point of the food "seasoning" and the evaluation point of the food "cooking method". Alternatively, the evaluation point of the food "body" may be calculated with (evaluation point of the food "material") × α + (evaluation point of the food "seasoning") × β + (evaluation point of the food "cooking method") × γ, using weighting coefficients α, β and γ. Furthermore, when there are a plurality of food "materials", an average point of the evaluation point of a fist food "material" and the evaluation point of a second food "material" may be the evaluation point of the food "material", or the evaluation point of the food "material" may be calculated with (evaluation point of the fist food "material") × α + (evaluation point of the second food "material") × β, using coefficients α and β. This enables suggestion of at least one type of wine to a user in accordance with the grade (level) of recommendation for a food.

In addition, the identification of a candidate of one or more type of wine to be suggested to a user may be performed based on the wine "flavor" corresponding to one part of the food "flavor". For example, in a case of a food name "Fiorentina/T bone steak", a wine having the feature of the "flavor" (i.e., "maturity") of the wine corresponding to one part of the "flavor" of the "Fiorentina/T bone steak" (e.g., the distinctive "umami" of the "Fiorentina/T bone steak" between the "acidity" and "umami") may be identified as a candidate of wine to be suggested to a user.

Step **S706:** A processing of determining whether or not information showing a condition for narrowing down the identified candidates for one or more type of wine among the identified candidates for one or more type of wine is performed. In this regard, the number of the information showing a condition for narrowing down candidates for the wine to be suggested may be one or may be plural. When the determination result is "Yes", the processing proceeds to step **S707** and when the determination result is "No", the processing proceeds to step **S708.**

The condition for narrowing down the identified candidates for one or more type of wine is, for example, wine budget inputted by a user, wine harvest year inputted by the user, and the user's wine preference inputted by the user. The wine budget can be expressed by, for example, but not limited to, the wine price range, criterion price, or the like as explained while referring to Figure **1B****.** The harvest year can be expressed by, but not limited to, wine harvesting year, period, vintage designation, or the like as explained while referring to Figure **1D****.** The user's wine preference can be expressed by, for example, but not limited to, "astringent wine", "full-bodied wine", "wine of the brand oo", "wine from □□ district" and the like.

Step **S707:** A processing of identifying at least one type of wine that satisfies the received condition among the identified one or more type of wine. In this regard, when the number of information showing the condition for narrowing down the candidates for the wine to be suggested is plural, at least one type of wine that satisfies all of the plurality of conditions may be identified, or at least one type of wine that satisfies any of the plurality of conditions may be identified.

Step **S708:** A processing of arbitrarily identifying at least one type of wine among the identified one or more type of wine.

Step **S709:** A processing of suggesting the identified at least one type of wine is performed. This is achieved by, for example, displaying information showing the identified at least one type of wine in a user apparatus.

Although the embodiment discussed above explained that whether or not information showing a condition inputted by a user is received is determined in step **S706,** the present invention is not limited thereto. For example, the server apparatus **500** may comprise means for learning a user's preference and may determine whether or not there is a learning history of the user's preference. This enables identification of at least one type of wine that satisfies a user's preference among an identified one or more type of wine based on the learning of the user's preference even when information showing a condition inputted by the user is not received.

In addition, although the embodiment discussed above explained an example wherein steps **S701** to **S709** are performed in a server apparatus **500,** the present invention is not limited thereto. For example, when a program for performing steps **S701** to **S709** is installed in a user apparatus **520₁,** steps **S701 to S709** may be performed in the user apparatus **520₁.** This enables a service of suggesting wine to drink with food to be realized by the user apparatus **520₁** alone. In such a case, the database part **530** may be wire connected to the user apparatus **520₁,** or may be wirelessly connected to the user apparatus **520₁.** Alternatively, at least a part of the information stored in the database part **530** may be installed in the memory part **523₁** of the user apparatus **520₁.**

As such, identification of compatibility between a food and a wine that was not expected in the past is possible by employing a method of suggesting a wine based on a plurality of viewpoints regarding the food and a plurality of viewpoints regarding the wine characteristic. This enables provision of wine in eating and drinking places that have not been familiar with wine such as sushi places and thereby enabling a user to enjoy a favorite combination of food and wine at any place when the user wants to drink wine.

Although the present invention has been exemplified using a preferable embodiment of the present invention as described above, the interpretation of the present invention should not be limited to this embodiment. It is understood that the scope of the present invention should be interpreted by the Claims alone. It is understood that those skilled in the art can practice an equivalent scope based on the description of the present invention and common general knowledge from the description of the specific and preferable embodiment of the present application.

### [Industrial Applicability]

The present invention is useful as an invention that provides a computer program that enables suggestion of a wine to drink with a food even in eating and drinking places without a sommelier, and a method, program and the like performed in the computer system. This enables encouragement of the demand of wine even in eating and drinking places that have not been familiar with wine, thereby increasing the amount of consumption of wine and activating the wine industry.

### [Reference Signs List]

- **200**: Server apparatus
- **210**: Internet
- **220₁** to **220_{N}**: User apparatuses
- **230**: Database part
- **500**: Server apparatus
- **510**: Internet
- **520₁** to **520_{N}**: User apparatuses
- **530**: Database part

## Claims

1. A computer system for suggesting a wine to drink with a food, the computer system comprising:
means for receiving food information showing a food inputted by a user; and
means for suggesting at least one type of wine to drink with the food based on the food information.

2. The computer system of claim 1, wherein the means for suggesting the at least one type of wine to drink with the food comprises:
means for identifying at least two features of the food based on the food information, wherein the at least two features of the food are at least associated with two viewpoints, which are a food "body" and a food "flavor"; and
means for identifying at least one type of wine to drink with the food based on the at least two features of the food.

3. The computer system of claim 2, wherein the food "body" is associated with three viewpoints, which are a food "material", a food "seasoning" and a food "cooking method".

4. The computer system of claim 2 or claim 3, wherein the means for identifying the at least one type of wine to drink with the food comprises:
means for identifying at least one type of wine to drink with the food based on the at least two features of the food and at least two features of the at least one type of wine, wherein the at least two features of the at least one type of wine are associated with two viewpoints, which are a wine "body" and a wine "flavor".

5. The computer system of claim 4, wherein the means for identifying the at least one type of wine to drink with the food comprises:
means for identifying one or more type of wine having a feature associated with a wine "body" recommended for the food "body" based on a feature of the food associated with the food "body"; and
means for identifying at least one type of wine to drink with the food among the identified one or more type of wine recommended for the food "body" based on a feature of the food associated with the food "flavor" and a feature of a wine associated with the wine "flavor".

6. The computer system of claim 4 or claim 5, wherein the wine "flavor" is an evaluation of a wine from a plurality of viewpoints related to a wine characteristic,
wherein the plurality of viewpoints related to the wine characteristic comprises viewpoints of "sweetness", "saltiness", "acidity", "astringency" and "maturity".

7. The computer system of any one of claims 2 to 6, wherein the food "flavor" is an evaluation of a food from a plurality of viewpoints related to a food characteristic,
wherein the plurality of viewpoints related to the food characteristic comprises viewpoints of "sweetness", "saltiness", "acidity", "bitterness" and "umami".

8. The computer system of claim 1, wherein the means for suggesting the at least one type of wine to drink with the food comprises:
means for identifying at least one feature of the food based on the food information, wherein the at least one feature of the food is at least associated with three viewpoints, which are a food "material", a food "seasoning" and a food "cooking method"; and
means for identifying at least one type of wine to drink with the food based on the at least one feature of the food.

9. The computer system of claim 8, wherein the means for identifying the at least one type of wine to drink with the food comprises:
means for identifying a first one or more type of wine recommended for the food "material" based on a feature of the food associated with the food "material";
means for identifying a second one or more type of wine recommended for the food "seasoning" based on a feature of the food associated with the food "seasoning";
means for identifying a third one or more type of wine recommended for the food "cooking method" based on a feature of the food associated with the food "cooking method"; and
means for identifying at least one type of wine to drink with the food based on at least one of the first one or more type of wine, the second one or more type of wine and the third one or more type of wine.

10. The computer system of claim 8, wherein the means for identifying the at least one type of wine to drink with the food comprises:
means for identifying a first one or more wine group recommended for the food "material" based on a feature of the food associated with the food "material";
means for identifying a second one or more wine group recommended for the food "seasoning" based on a feature of the food associated with the food "seasoning";
means for identifying a third one or more wine group recommended for the food "cooking method" based on a feature of the food associated with the food "cooking method";
means for identifying at least one wine group based on the first one or more wine group, the second one or more wine group and third one or more wine group; and
means for identifying at least one type of wine comprised in the at least one wine group as the at least one type of wine to drink with the food.

11. The computer system of claim 10, wherein the at least one wine group is classified by type into a plurality of wines from a plurality of viewpoints regarding wine characteristic,
wherein the plurality of viewpoints regarding wine characteristic comprises viewpoints, which are "astringency", "acidity", "sweetness", "volume", "scent" and "umami".

12. The computer system of any one of claims 1 to 11, wherein the means for suggesting the at least one type of wine to drink with the food suggests at least one type of wine for each rank that shows a grade of recommendation for the food.

13. The computer system of any one of claims 2 to 12, wherein the computer system further comprises means for receiving information that shows wine budget inputted by the user,
wherein the means for suggesting the at least one type of wine to drink with the food further comprises means for identifying at least one type of wine with a price within the wine budget among the identified at least one type of wine.

14. The computer system of any one of claims 2 to 13, wherein the computer system further comprises means for receiving information that shows a wine preference of the user inputted by the user,
wherein the means for suggesting the at least one type of wine to drink with food further comprises means for identifying at least one type of wine that satisfies the wine preference of the user among the identified at least one type of wine to drink with the food.

15. The computer system of any one of claims 2 to 14, wherein the computer system further comprises means for learning the wine preference of the user,
wherein the means for suggesting the at least one type of wine to drink with the food further comprises means for identifying at least one type of wine that satisfies the wine preference of the user among the identified at least one type of wine to drink with the food.

16. A method performed in a computer system for suggesting a wine to drink with a food, the computer system comprising a processor part and the method comprising:
the processor part receiving food information showing a food inputted by a user; and
the processor part suggesting at least one type of wine to drink with the food based on the food information.

17. A program performed in a computer system for suggesting a wine to drink with a food, the computer system comprising a processor part and once the program is performed by the processor part, the program has the processor part to at least perform:
receiving food information that shows a food inputted by a user; and
suggesting at least one type of wine to drink with the food based on the food information.
